# EUROPEAN PATENT APPLICATION

(11) **EP 2 246 731 A1**
(43) Date of publication of application: **03.11.2010**
(21) Application number: 08872484.4
(22) Date of filing: 08.10.2008
(51) Int. Cl.: G02F 1/133, G02F 1/1335, G02F 1/13357, G09F 9/00, G09G 3/20, G09G 3/34, G09G 3/36

(54) **DISPLAY DEVICE**

(30) Priority: 14.02.2008 JP 2008033213
(71) Applicant: Sharp Kabushiki Kaisha, Osaka-shi, Osaka 545-8522 (JP)
(72) Inventor: MUROI, Takao, Osaka 545-8522 (JP); HASHIMOTO, Katsuteru, Osaka 545-8522 (JP); OTOI, Katsuya, Osaka 545-8522 (JP); FUJIWARA Kohji, Osaka 545-8522 (JP)
(74) Representative: Goddar, Heinz J.
(86) International application number: PCT/JP2008/068304
(87) International publication number: WO 2009/101727

(57) **Abstract**

It is an object of the present invention to provide a liquid crystal display device with high color reproduction ability even when an area active backlight is driven. A liquid crystal display device (1) of the present invention drives a liquid crystal panel (2) and a backlight device (3), respectively, using a video signal input from outside. In the backlight device (3), a plurality of illuminating areas (Ha) are set on LED substrates (7) with respect to a plurality of display areas provided on the liquid crystal panel (2), and area active backlight drive is performed, which lights up light-emitting diodes (8) in the unit of the illuminating areas. When a backlight data processing part (lighting control part) (15) determines that a brightness signal value indicated for a blue light-emitting diode (light source of a predetermined color) (8b) is larger than brightness signal values indicated for other light-emitting diodes (8r, 8g), and determines that a value obtained by multiplying the brightness signal value indicated for the blue light-emitting diode (8b) by a predetermined ratio is equal to or more than the bright signal values indicated for the other light-emitting diodes (8r, 8g), the backlight data processing part (15) lights up the other light-emitting diodes (8r, 8g), using the brightness signal value indicated for the blue light-emitting diode (8b).

## Description

### DISPLAY DEVICE

### Technical Field

The present invention relates to a display device, and in particular, to a non-light-emitting display device such as a liquid crystal display device.

### Background Art

In recent years, for example, liquid crystal display devices have been used widely in liquid crystal TVs, monitors, and mobile telephones, as flat panel displays having features such as thinness and light weight, compared with conventional Braun tubes. Such a liquid crystal display device includes a backlight device emitting light and a liquid crystal panel displaying a desired image by playing a role of a shutter with respect to light from light sources provided in the backlight device.

Further, the above-mentioned backlight devices are classified roughly into a direct type and an edge-light type depending upon the arrangement of light sources with respect to the liquid crystal panel. A liquid crystal display device having a liquid crystal panel of 20 inches or more generally uses the direct type backlight device that can achieve the increase in brightness and enlargement more easily than the edge-light type backlight device. Further, a direct type backlight device having a plurality of lamps (discharge tubes) such as cold cathode fluorescent lamps (CCFLs) placed so as to be opposed to the liquid crystal panel with a diffusion plate interposed therebetween has been mainstream. However, such a discharge tube contains mercury, which makes it difficult to recycle a discharge tube to be discarded, protect environment, etc. Then, a backlight device using light-emitting diodes (LEDs) containing no mercury as light sources has been developed and put into practical use.

Further, in a conventional liquid crystal display device using the above-mentioned LED backlight device, for example, as described in JP 2006-133721 A, LED units composed of LEDs of three colors emitting light of red (R), green (G), and blue (B) are used, and in the conventional liquid crystal display device, a number of LED units are arrayed in a matrix. Further, in the conventional liquid crystal display device, a color mixture property with respect to white light is enhanced and inconsistencies in color and brightness can be suppressed by using three green LEDs, two red LEDs, and two blue LEDs in each of the LED units.

Further, for example, as described in JP 2005-338857 A, some conventional liquid crystal display devices using the above-mentioned LED backlight device are configured so as to perform area active drive, in which a liquid crystal panel is divided into a plurality of areas, and a drive part for selectively controlling the brightness of light emitted by LEDs depending upon the divided areas is provided. In such a conventional liquid crystal display device, the image quality on the liquid crystal panel is improved and the power consumption can be reduced, compared with a backlight device using cold cathode fluorescent lamps.

Further, in a conventional liquid crystal display device prepared for the above-mentioned area active drive, for example, as described in Patent No. 3523170, a tristimulus value XYZ is calculated based on an RGB input signal and a backlight brightness level determined from an input signal value, and a corrected XYZ is obtained by correcting the tristimulus value XYZ with a correction value and a color correction value ascribed to a backlight illumination distribution. Further, in the conventional liquid crystal display device, it has been proposed that a signal level R"G"B" to the drive part of the liquid crystal panel is obtained by performing inverse transformation from (X, Y, Z) to (R, G, B). In the conventional liquid crystal display device, a chromaticity shift caused by the difference in emission color of light sources can be eliminated by using the above-mentioned XYZ matrix.

In general, the above-mentioned backlight device uses LEDs. For example as shown in JP 2006-106437 A, the LED can enlarge a color reproduction range, compared with a CCFL, and can be used as means substantially containing colors present in the natural world such as Pointer's Color.

### Disclosure of Invention

### Problem to be Solved by the Invention

When the conventional liquid crystal display device as described above is configured so as to perform area active drive, generally, LEDs of RGB are used as a backlight device, and a white color is expressed by regulating the balance of each brightness of RGB. In a method for controlling such a backlight device, for example, monochromic area active drive that drives LED units of RGB in a white gray scale, and RGB independent area active drive that drives LED units of RGB independently for each color of RGB are being put into practical use.

Specifically, according to the monochromic area active drive, the LED units of RGB are driven with the brightness values (brightness signals) of the remaining colors adjusted to any of the brightness maximum value of RGB contained in an input video signal. On the other hand, according to the RGB independent area active drive, a brightness signal of a corresponding LED in the LED units of RGB is generated in accordance with the brightness value of each color of RGB contained in an input video signal, and the LED is driven.

According to the above-mentioned RGB independent area active drive, in the case where a video close to a monochromic color flows, only a color of a backlight in accordance with the monochromic color is emitted, and hence, compared with the monochromic area active drive, the RGB independent area active drive is excellent in color reproduction ability, and also has an effect of reducing the power consumption since unnecessary color is not emitted. Accordingly, the RGB independent area active drive is a very preferred driving method.

However, in the conventional liquid crystal display device using the above-mentioned RGB independent area active drive, it is difficult to improve display quality, in some cases, depending upon the transmission characteristics of a color filter (CF characteristics), etc. used in the liquid crystal panel. Particularly, in the conventional liquid crystal display device, when the above-mentioned area active drive is performed, a color change (color displacement) is likely to be recognized visually due to light (leakage light) from an adjacent area, which makes it difficult to improve display quality.

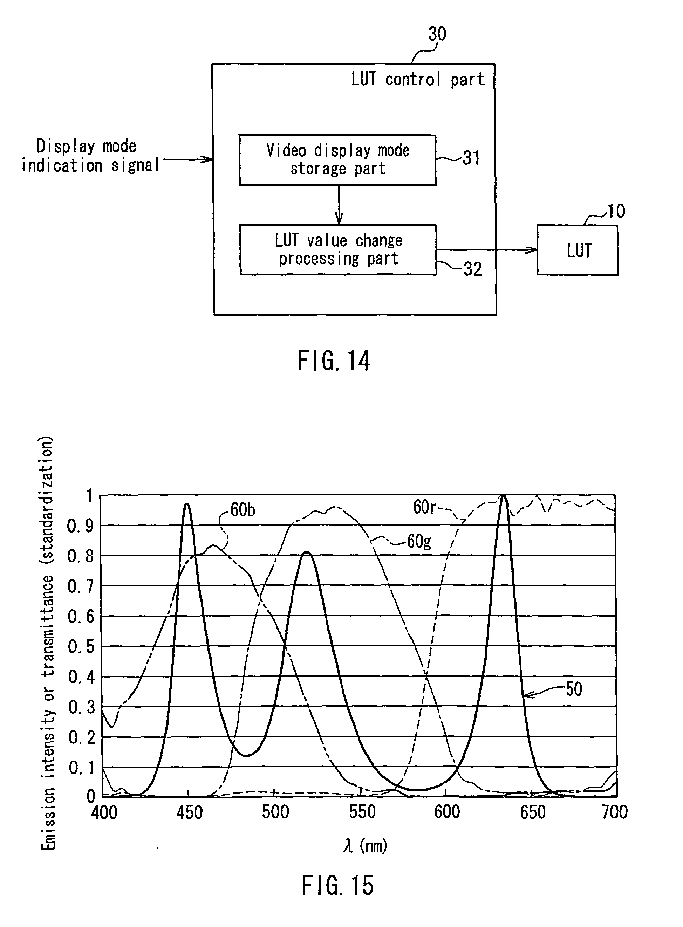

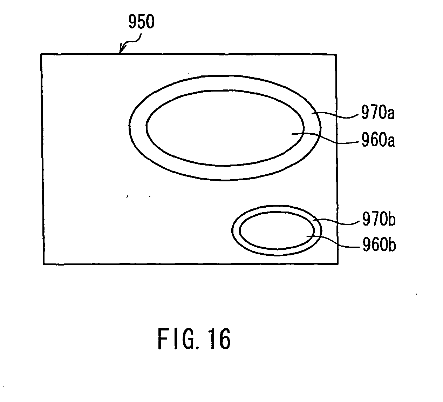

Hereinafter, the above-mentioned problems in the conventional liquid crystal display device will be described with reference to FIGS. 15 and 16.

FIG. 15 is a graph showing a spectral transmission distribution (CF characteristics) of a color filter used generally in the liquid crystal display device and a spectral distribution (emission wavelength characteristics) of each light-emitting diode of RGB. FIG. 16 is a view illustrating specific problems in a display image when area active drive is performed in the conventional liquid crystal display device.

First, the problem of emission quality according to the spectral transmission distribution of a color filter (CF characteristics), etc. will be described.

As illustrated by a curve 50 of FIG. 15, LEDs of red (R), green (G), and blue (B) respectively have peak wavelengths at about 635 nm, 520 nm, and 450 nm, and emit light having an extended wavelength. An LED unit composed of the LEDs of R, G, and B generally has an emission spectrum remarkably different from that of a cold cathode fluorescent lamp having a steep wavelength band. Therefore, the wavelength of light emitted by an LED can enlarge the wavelength that can be expressed in a video and enables a large color reproduction range of a CIE chromaticity diagram to be obtained, compared with the conventional cold cathode fluorescent lamp. In particular, regarding the wavelength of G, a principal wavelength can take the largest color reproduction range in the vicinity of 520 nm (chromatic coordinates (x, y) of RGB when the CF is combined with the LED of FIG. 15 are R(0.70, 0.30), G(0.16, 0.73), an B(0.15, 0.03).)

On the other hand, color filters of red (R), green (G), and blue (B) have transmission characteristics of transmitting light most at wavelengths of about 635 nm, 535 nm, and 465 nm, as illustrated by curves 60r, 60g, and 60b in FIG. 15. Then, the color filters also have characteristics of transmitting light at a wavelength width larger than that of light emitted by the LED. Therefore, for example, the color filter of B (curve 60b) not only transmits light having a wavelength emitted by the LED of B but also transmits a part of light having a wavelength emitted by the LED of G. Further, the light emitted by the LED of G passes through the color filter of G (curve 60g) and the color filter of B (curve 60b). This relationship also occurs in the relationship between the color filters of the other colors and the LEDs of the other colors. Thus, there is an area in which the spectral distribution of a plurality of LEDs overlaps the spectral transmission distribution of a particular color filter, and the degradation in display quality ascribed to the overlapping of the distributions (characteristics) may occur.

Next, the problem that, in the case where area active drive is performed, a color change (color displacement) is likely to be recognized visually due to light from an adjacent area (leakage light) will be described.

For example, in the case where an image in which light and white cloud floats in the blue sky is displayed using the area active drive, as shown in FIG. 16, an unnatural image caused by the chromaticity shift may be displayed in respective boundary portions 970a, 970b between the blue sky 950 and the clouds 960a, 960b (herein, the blue sky is BLUE SKY of a Macbeth chart, R = 112, G = 135, B = 169 in a 8bit RGB signal; the white cloud is R = 249, G = 248, B = 248 in a 8bit RGB signal).

More specifically, according to the area active drive, the blue sky 950 can be displayed (reproduced) with a uniform blue color with respect to the chromaticity (x; 0.25, y; 0.26) of a blue sky color. On the other hand, in the respective boundary portions 970a, 970b between the sky 950 and the clouds 960a, 960b, white light from LEDs of RGB of LED units emitting light below the pixels of the respective clouds 960a, 960b (in particular, light from the LED of G among the white light composed of light from all the LEDs of the RGB), and blue light from the LED of B contained in the LED unit emitting light below the pixel of the sky 950 are mixed with each other. Then, due to the relationship between the transmission characteristics of color filters of B and G and the LED emission characteristics, green light contained in the white light passes through the respective boundary portions 970a, 970b. Therefore, a display with a y-value being higher by 0.01 (x: = 0.25, y = 0.27) is obtained, and the sky having different chromaticity is generated in the sky originally having the same color in a sky image on the display surface, and thus unnatural display may be performed.

Thus, in the conventional liquid crystal display device, due to the area active drive, there arises a problem that a color change (color displacement) is likely to be recognized easily in a boundary portion of the areas when the brightness of the LED varies for each area.

In particular, in the case where the spectral distribution of the LED of G as shown in FIG. 15 is shifted to the transmission area side of the spectral transmittance distribution of the color filter of B, when the LED of G is lit up and the brightness value thereof is largest (when the magnitude correlation regarding the brightness amount of light emitted by each LED is G >> R, B), the light of the LED of G leaks from the color filter of B, and a color displacement looks larger. Therefore, in particular, it is not preferred that light of the LED of G leaks from the color filter of B.

In order to overcome this phenomenon, there is a method for separating the spectral transmittance characteristics of the respective colors completely by enhancing the color purity of the color filter. However, regarding G and B whose color filter wavelength bands overlap generally, it is not preferred to enhance the color purity of the color filter to separate the emission wavelength of the LED having broad wavelength characteristics completely, because the brightness amount of light to be transmitted decreases greatly.

In view of the above problems, it is an object of the present invention to provide a display device capable of enhancing display quality even when area active drive is performed.

### Means for Solving Problem

In order to achieve the above-mentioned object, a display device of the present invention includes a backlight part having a light-emitting part that emits illumination light and a display part configured so as to be capable of displaying information in color, using the illumination light from the backlight part. The display part has a plurality of pixels, and each of the pixels is provided with color filters formed of a plurality of colors. The display device includes: a plurality of illuminating areas provided in the light-emitting part; a plurality of light sources that are provided for each of the illuminating areas and emit light of colors corresponding to the colors of the color filters and a lighting control part that controls each lighting drive of the plurality of light sources in each of the plurality of illuminating areas, using an indication signal input from outside. The color filter formed of a predetermined color among the color filters formed of a plurality of colors provided on each of the pixels has characteristics of transmitting light from the light source of the predetermined color corresponding to the color filter and light form the other light sources. When the lighting control part determines that a brightness signal value indicated for the light source of the predetermined color is larger than brightness signal values indicated for the other light sources in each of the plurality of illuminating areas and that a value obtained by multiplying the brightness signal value indicated for the light source of the predetermined color by a predetermined ratio is equal to or more than the brightness signal values indicated for the other light sources, the lighting control part lights up the other light sources, using the brightness signal value indicated for the light source of the predetermined color.

In the display device configured as described above, a plurality of light sources emitting light of colors corresponding to the colors of the color filters formed of a plurality of colors are provided for each of the illuminating areas. Further, the color filter formed of a predetermined color among the color filters formed of a plurality of colors has characteristics of transmitting light from the light source of the predetermined color corresponding to the color filter and light form the other light sources. Further, the lighting control part is set, which lights up the other light sources, using the brightness signal value indicated for the light source of the predetermined color when it is determined that the brightness signal value indicated for the light source of the predetermined color is larger than the brightness signal values indicated for the other light sources in each of the plurality of illuminating areas and that the value obtained by multiplying the brightness signal value indicated for the light source of the predetermined color by the predetermined ratio is equal to or more than the brightness signal values indicated for the other light sources. Thus, unlike the above-mentioned conventional examples, color displacement can be prevented from being recognized visually due to light from an adjacent illuminating area, even when area active drive is performed. Consequently, unlike the above-mentioned conventional examples, a display device capable of enhancing display quality can be configured, even when area active drive is performed.

Further, in the above-mentioned display device, it is preferred that a plurality of display areas, upon which light from the plurality of illuminating areas is incident respectively, are set in the display part, and the display device includes a display control part that drives the display part in a unit of the pixels, using an input video signal, wherein the lighting control part determines a brightness value of light emitted from the corresponding light source for each of the illuminating areas, using the input video signal, and the display control part corrects the input video signal, using the brightness value for each of the illuminating areas from the lighting control part, and drives the display part based on the corrected video signal in the unit of the pixels.

In this case, a display device prepared for area active drive with high image quality and less power consumption can be configured, compared with a display device using a backlight device having discharge tubes such as cold cathode fluorescent lamps.

Further, in the above-mentioned display device, the display control part may correct the brightness value for each of the illuminating areas from the lighting control part, using data on a previously set point spread function (PSF).

In this case, the display control part can display the information displayed on the display part with more appropriate brightness and enhance display quality

Further, in the above-mentioned display device, it is preferred that light-emitting diodes are used as the light sources.

In this case, a light source excellent in color reproducibility with a long longevity and a compact size can be configured easily, and hence, a miniaturized display device with high performance can be configured easily.

Further, in the above-mentioned display device, red, green, and blue light-emitting diodes that emit red light, green light, and blue light, respectively, may be used as the light sources, and when the lighting control part determines that a brightness signal value indicated for the blue light-emitting diode is larger than a brightness signal value indicated for the green light-emitting diode in each of the plurality of illuminating areas and that a value obtained by multiplying the brightness signal value indicated for the blue light source by the predetermined ratio is equal to or more than the brightness signal value indicated for the green light-emitting diode, the lighting control part may light up the green light-emitting diode, using the brightness signal value indicated for the blue light-emitting diode.

In this case, the lighting control part performs the above-mentioned determination processing only with respect to blue light and green light that have wavelengths relatively close to each other and are relatively likely to cause a decrease in display quality, which can reduce the processing burden on the lighting control part, and the lighting control part can control lighting of the light-emitting diode at a high speed.

Further, in the above-mentioned display device, it is preferred that the lighting control part uses the predetermined ratio previously determined based on predetermined CF characteristics of the color filters and predetermined emission characteristics of the light sources.

In this case, the lighting control part can control lighting of the respective light sources of the above-mentioned three colors more appropriately in accordance with predetermined CF characteristics and predetermined emission characteristics.

Further, it is preferred that the display device includes a storage part that stores a plurality of kinds of the predetermined ratios, and a selecting and indicating part that selects one kind of predetermined ratio from the plurality of kinds of predetermined ratios stored in the storage part based on an indication signal from outside and outputs the selected predetermined ratio to the lighting control part.

In this case, a predetermined ratio in accordance with the indication signal is selected and output to the lighting control part, and the lighting control part can control each lighting drive of a plurality of light sources appropriately in each of a plurality of illuminating areas, using the selected predetermined ratio.

Further, in the display device, the indication signal may be a display mode indication signal indicating a display mode in the display part.

In this case, an appropriate predetermined ratio is selected in accordance with a display mode desired by a user, and a display on the display part can be performed appropriately in accordance with the display mode desired by the user

### Effects of the Invention

According to the present invention, a display device can be provided, which is capable of enhancing display quality even when area active drive is performed.

### Brief Description of Drawings

[FIG. 1] FIG. 1 is a view illustrating a liquid crystal display device according to Embodiment 1 of the present invention.
[FIG. 2] FIG. 2 is a plan view showing an arrangement example of LED substrates in a backlight device.
[FIG. 3] FIG. 3 is a plan view showing an arrangement example of LED units on the LED substrate.
[FIG. 4] FIG. 4 is a diagram illustrating a specific configuration example of the LED unit.
[FIG. 5] FIG. 5 is a diagram illustrating another configuration example of the LED unit.
[FIG. 6] FIG. 6 is a diagram illustrating a configuration of main portions of the liquid crystal display device.
[FIG. 7] FIG. 7 is a block diagram showing a specific configuration of a data delay processing part shown in FIG. 6.
[FIG. 8] FIG. 8 is a block diagram showing a specific configuration of a backlight data processing part shown in FIG. 6.
[FIG. 9] FIG. 9 is a block diagram showing a specific configuration of an LED output data operation part shown in FIG. 8.
[FIG. 10] FIG. 10 is a flowchart showing a processing operation in the LED output data operation part.
[FIG. 11] FIG. 11 is a flowchart showing another processing operation in the LED output data operation part.
[FIG. 12] FIG. 12 is a diagram illustrating a specific example of a display image displayed by the liquid crystal display device.
[FIG. 13] FIG. 13 is a diagram illustrating a configuration of main portions of a liquid crystal display device according to Embodiment 2 of the present invention.
[FIG. 14] FIG. 14 is a block diagram showing a specific configuration of a LUT control part shown in FIG. 13.
[FIG. 15] FIG. 15 is a graph showing a spectral transmittance distribution of a color filter (CF characteristics) generally used in a liquid crystal display device and a spectral distribution (emission wavelength characteristics) of respective light-emitting diodes of RGB.
[FIG. 16] FIG. 16 is a diagram illustrating specific problems in a display image when area active drive is performed in a conventional liquid crystal display device.

### Description of the Invention

Hereinafter, a preferred embodiment of a display device of the present invention will be described with reference to the drawings. In the following description, the case where the present invention is applied to a transmission-type liquid crystal display device will be described. Further, the dimensions of constituent members in each figure do not faithfully reflect the actual dimensions of constituent members, dimension ratio of the respective constituent members, etc.

### [Embodiment 1]

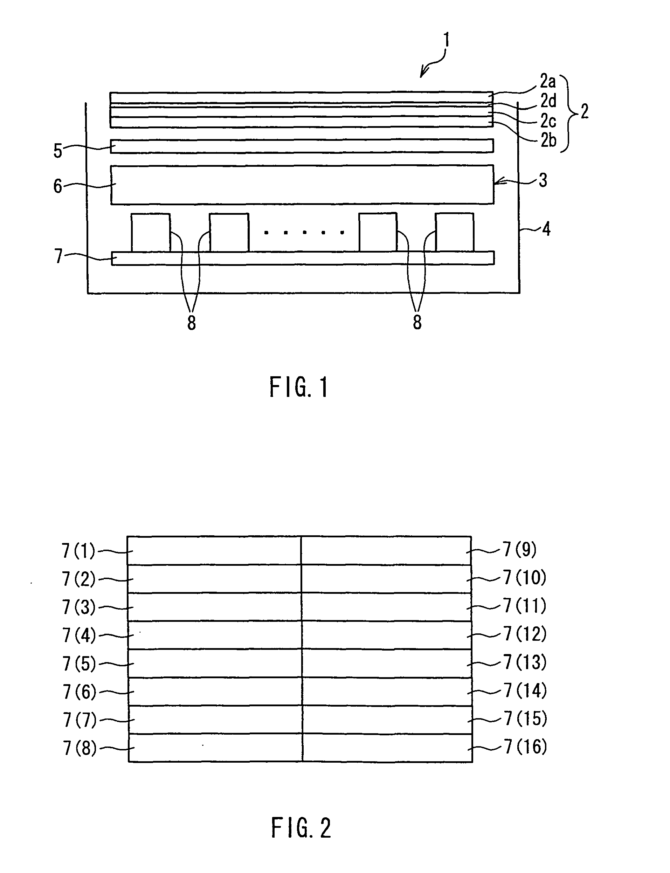

FIG. 1 is a view illustrating a liquid crystal display device according to Embodiment 1 of the present invention. In the figure, a liquid crystal display device 1 of the present embodiment includes a liquid crystal panel 2 as a display part provided with an upper side in the figure being a viewer side (display surface side), and a backlight device 3 as a backlight part that generates illumination light illuminating the liquid crystal panel 2, placed on a non-display surface side (lower side in the figure) of the liquid crystal panel 2. Further, in the present embodiment, the liquid crystal panel 2 and the backlight device 3 are contained in a housing 4 while being integrated as the transmission-type liquid crystal display device 1. Further, in the liquid crystal display device 1 of the present embodiment, a display control part and a lighting control part are provided, which respectively drive the liquid crystal panel 2 and the backlight device 3 using a video signal input from outside (described later in detail).

The liquid crystal panel 2 includes a pair of transparent substrates 2a, 2b, and a liquid crystal layer 2c and a color filter (CF) 2d provided between the transparent substrates 2a, 2b. Further, the liquid crystal panel 2 has a plurality of pixels, and is configured so as to display information such as characters and images in a full-color image using illumination light from the backlight device 3. Further, in the liquid crystal panel 2, as described later, a plurality of display areas are set on a display surface.

The backlight device 3 includes an optical sheet group 5 and a diffusion plate 6, and LED substrates 7 on which LED units 8 including light-emitting diodes of three colors: red (R), green (G), and blue (B) are mounted. The optical sheet group 5 includes, for example, a polarization sheet 7 and a prism (collecting) sheet 8, and the optical sheets increase the brightness of the illumination light from the backlight device 3 appropriately, and thus, the display performance of the liquid crystal panel 2 is enhanced.

In the backlight device 3, a plurality of the LED substrates 7 are provided in a matrix, and a plurality of LED units 8 are set on each LED substrate 7. Further, in the backlight device 3, a plurality of illuminating areas for allowing light of the light-emitting diodes as light sources to be incident upon the plurality of display areas provided on the liquid crystal panel 2 are set on the plurality of LED substrates 7 as light-emitting parts emitting the illuminating light, and thus, area active backlight drive for lighting up the light-emitting diodes in the unit of the illuminating areas is performed.

Hereinafter, the LED substrates 7 and the LED units 8 in the present embodiment will be specifically described with reference to FIGS. 2 to 4.

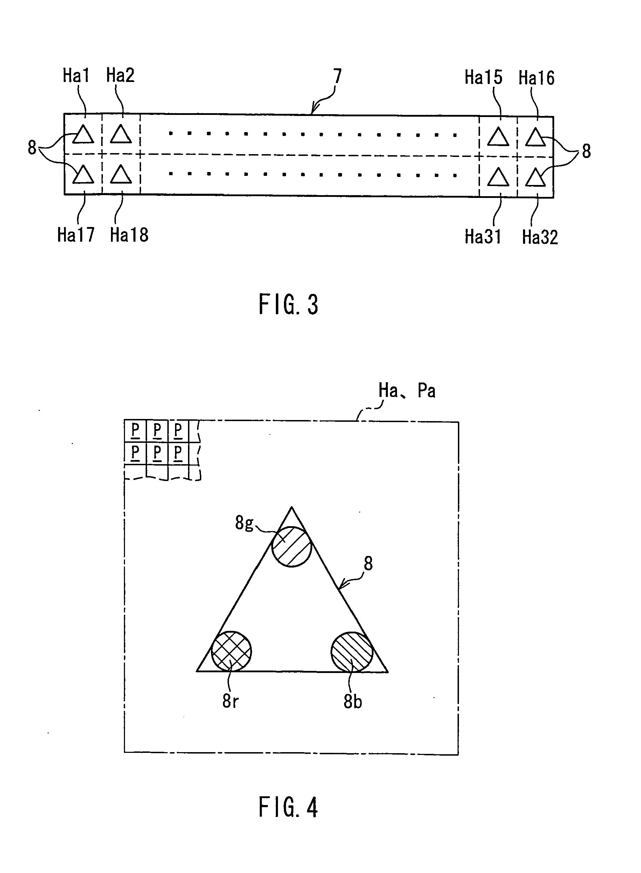

FIG. 2 is a plan view showing an arrangement example of the LED substrates in the backlight device, and FIG. 3 is a plan view showing an arrangement example of the LED units on the LED substrate. FIG. 4 is a diagram illustrating a specific configuration example of the LED unit.

As illustrated in FIG. 2, in the backlight device 3, 16 LED substrates 7(1), 7(2), ..., 7(15), 7(16) (hereinafter, referred to as "7" collectively) in total provided in two rows and 8 columns are set. Further, each LED substrate 7 is partitioned into 32 areas (2 rows and 16 columns) in total as illustrated in FIG. 3, and the LED unit 8 is mounted on each area. Further, 32 areas respectively constitute illuminating areas Ha1, Ha2, ..., Ha31, Ha32 (hereinafter, referred to as "Ha" collectively) set in the backlight device 3.

In FIG. 3, in order to show each illuminating area Ha clearly, the respective illuminating areas are partitioned with vertical lines and horizontal lines. However, actually, the respective illuminating areas Ha are not partitioned from each other with boundary lines or partition members. For example, the respective illuminating areas Ha may be partitioned by providing partition members on the LED substrate 7.

As illustrated in FIG. 4, each illuminating area Ha is provided with the LED unit 8 having light-emitting diodes 8r, 8g, 8b of RGB arranged at apex positions of a triangle. Further, each illuminating area Ha is provided so as to correspond to the display area Pa set on the display surface of the liquid crystal panel 2, and light from the LED unit 8 is incident upon a plurality of pixels P included in the display area Pa. On the display surface, for example, 1920 × 1080 pixels are provided, and one display area Pa includes 4050 (= (1920 × 1080)/512 (= 16 × 32)) pixels.

Further, the respective light-emitting diodes 8r, 8g, 8b constitute light sources, and the light-emitting diodes 8r, 8g, 8b illuminate the corresponding display area Pa with red light, green light, and blue light, respectively.

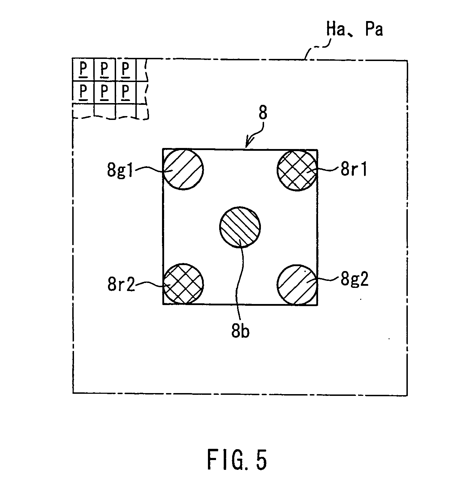

The configuration of the LED unit 8 in the present embodiment is not limited to the one shown in FIG. 4, and for example, as illustrated in FIG. 5, an LED unit 8 having one blue light-emitting diode 8b, two red light-emitting diodes 8r1, 8r2, and two green light-emitting diodes 8g1, 8g2 can also be used.

Further, in the above description, the case of using the LED substrates 7 has been described. However, a thinner backlight device can also be obtained, for example, by placing LED units directly on the surface on an inner side of the housing 4 to integrate the setting of the LED substrates 7. Further, each set number of the LED substrates 7 and the LED units 8 can be changed appropriately, and the illuminating areas Ha and the display areas Pa can also be set with a ratio other than 1:1.

Further, the division number of the LED unit 8 may be, for example, 10 × 20 instead of being limited to 16 × 32.

In the case where the number of the light-emitting diodes is extremely small with respect to the size of the liquid crystal panel 2, the inconsistencies in brightness distribution caused by the shortage of the amount of light to the display surface, variation in characteristics of the LEDs, and the enlargement of an optical distance with respect to an adjacent LED unit cannot be prevented even by compensation computation of an LCD. Therefore, for example, it is preferred to place 500 or more LED units 8 with respect to the liquid crystal panel 2 of about 40 to 70 inches.

Further, it is preferred that the LED unit 8 of the present embodiment is composed of light-emitting diodes capable of maximizing a color reproduction range on a CIE chromaticity diagram. More specifically, if description is made with a principal wavelength, it is preferred that G is 510 to 530 nm in the vicinity of an inflection point (about 520 nm) on a CIE curve, B is 430 to 460 nm, and R is 630 to 650 nm.

Herein, the reason why a value smaller than 430 nm is not used as the principal main wavelength of B and a value larger than 650 nm is not used as the principal main wavelength of R in the setting of a range of the wavelength is that the spectral luminous efficacy of a human and the influence of the CF are considered. That is, the spectral luminous efficacy of a human takes a peak at 555 nm, and it is not preferred to design the principal wavelengths of B, R on an extremely short wavelength side and on an extremely long wavelength side, since such design causes a decrease in spectral luminous efficacy, which leads to a decrease in emission power efficiency (increase in power consumption, etc.). Further, the light-emitting diodes of B and R may take arbitrary values that can be adjusted so as to cover about 100% of the color reproduction range of National Television System Committee (NTSC) adopted as a broadcasting system of a color television.

It is particularly preferred that the principal wavelength of G is in a range of 520 to 530 nm so as to cover the color reproduction range as much as possible as in Pointer's Color and to minimize the influence of transmission through the CF of B with the emission wavelength of G.

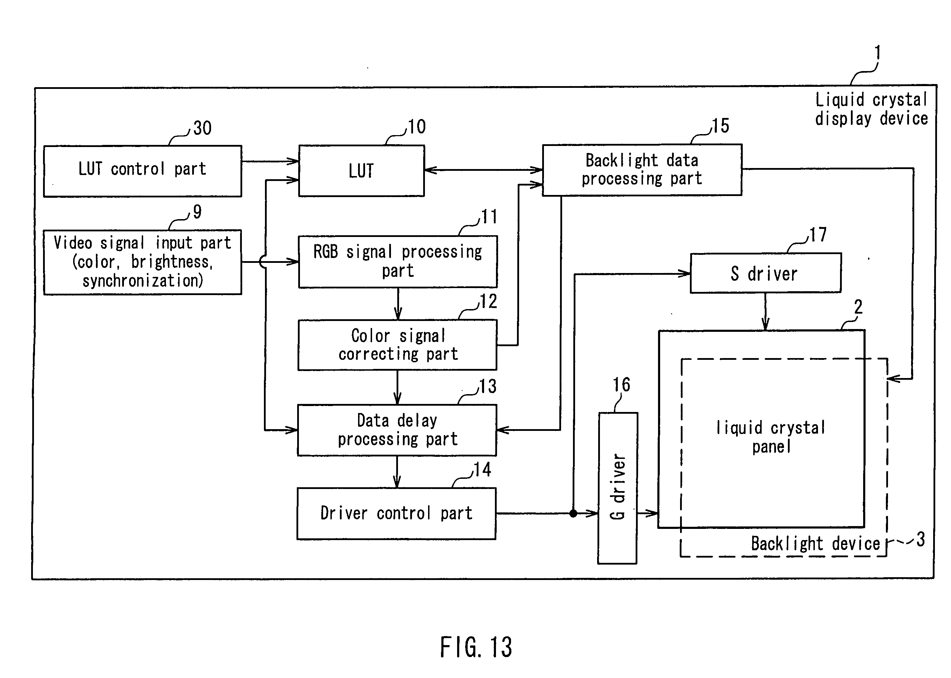

Further, in the present embodiment, with respect to the RGB-CF characteristics used generally, the wavelength of an LED is selected so that light having passed through the CF forms a color reproduction range that is so wide as to substantially contain colors present in the natural world, for example, Pointer's Color and that the spectral luminous efficacy is taken into consideration. That is, as illustrated in FIG. 13, light-emitting diodes with principal wavelengths: R = 635 nm, G = 520 nm, and B = 450 nm are used.

As the color filter (CF) 2d, for example, a color filter having spectral transmittance characteristics shown in FIG. 13 is used. Examples of the system of the color filter include a system composed of three colors of RGB and a multi-primary color system with CFs of yellow, cyan, etc. in addition to three colors of RGB added to the method for enlarging a color reproduction range. According to the multi-primary color system, the number of combination of colors (capable of displaying, for example, an target tristimulus value of XYZ) and algorithms are complicated. Therefore, in the present embodiment, a large color reproduction range is realized using liquid crystal CFs of three colors of RGB configured most simply and light sources of three colors of RGB corresponding thereto.

Then, as indicated by the curves 60r, 60g, and 60b in FIG. 13, the color filter (CF) 2d has transmittance characteristics in which about 635 nm, 535 nm and 465 nm are wavelength regions with the best transmittance, and in 580-700 nm, 475-605 nm, and 400-530 nm, a transmittance of 0.1 or more (in the case where the highest transmittance is set to be 1) is obtained. That is, the color filter (CF) 2d has characteristics in which light is transmitted with a wavelength width larger than that of light emitted by the light-emitting diode. Therefore, there is an area in which the spectral distribution of the light-emitting diode 8g of G and the spectral transmittance distribution of the color filter of B overlap each other.

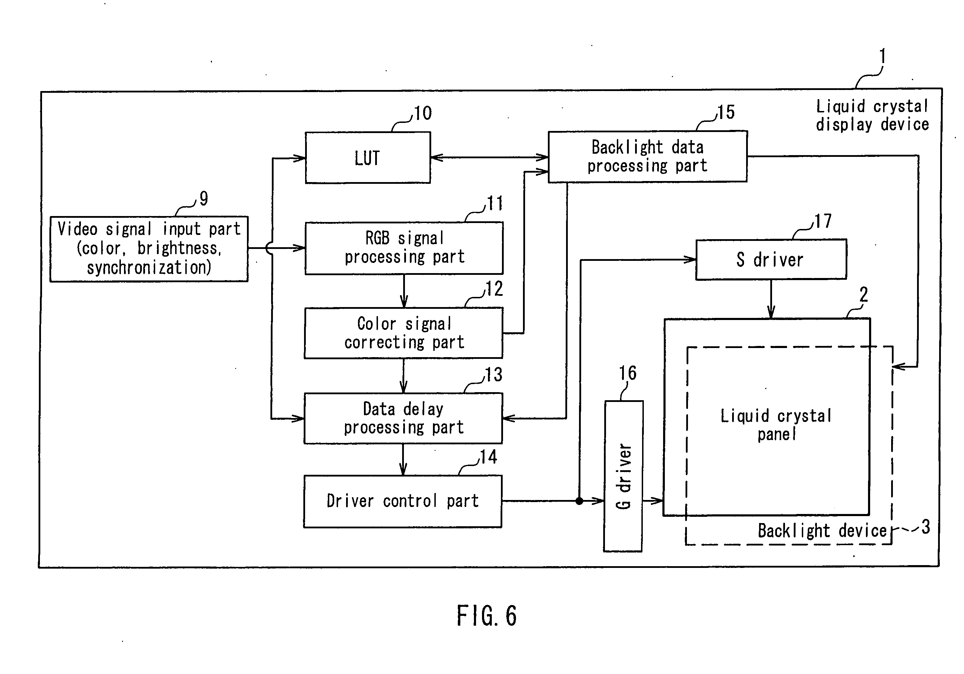

Next, the display control part and the lighting control part that drive each part of the liquid crystal display device 1 of the present embodiment will be described specifically with reference to FIGS. 6 to 9.

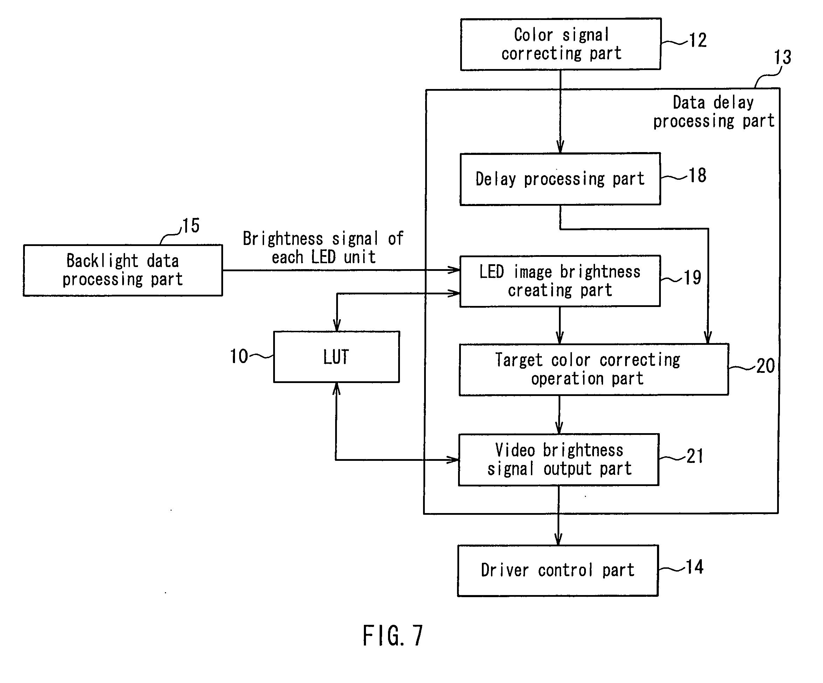

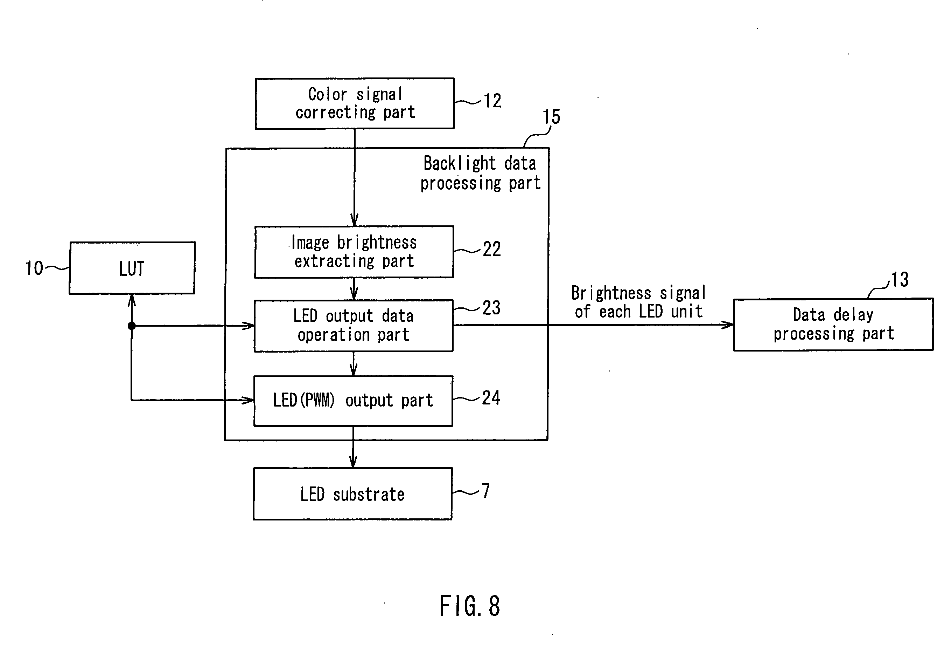

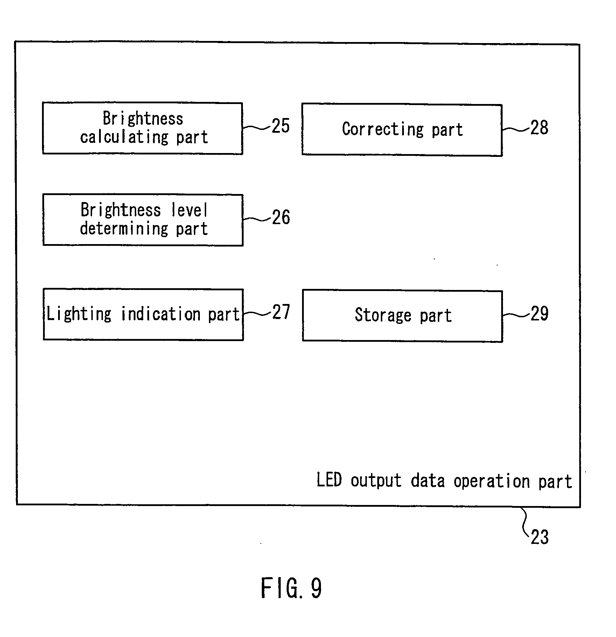

FIG. 6 is a diagram illustrating a configuration of main portions of the liquid crystal display device. FIG. 7 is a block diagram showing a specific configuration of the data delay processing part shown in FIG. 6. FIG. 8 is a block diagram showing a specific configuration of the backlight data processing part shown in FIG. 6. FIG. 9 is a block diagram showing a specific configuration of an LED output data operation part shown in FIG. 8

As shown in FIG. 6, the liquid crystal display device 1 includes a video signal input part 9 that receives and processes a video signal input from outside, a look-up table (LUT) 10 that constitutes a storage part in which predetermined data is previously stored, and an RGB signal processing part 11 connected to the video signal input part 9. Further, in the liquid crystal display device 1, a color signal correcting part 12, a data delay processing part 13 and a driver control part 14 connected successively to the RGB signal processing part 11, a backlight data processing part 15 connected between the color signal correcting part 12 and the data delay processing part 13, and a G (gate) driver 16 and an S(source) driver 17 connected to the driver control part 14 are set.

In the liquid crystal display device 1, when the driver control part 14 outputs indication signals to the G driver 16 and the S driver 17 in accordance with a video signal input to the video signal input part 9, the liquid crystal panel 2 is driven in the unit of the pixels, and when the backlight data processing part 15 outputs an indication signal to the backlight device 3, the respective light-emitting diodes 8r, 8g, 8b of the LED unit 8 are lit up.

The video signal input part 9 receives a complex video signal containing a color signal indicating a display color in a display image, a brightness signal in the unit of the pixels, and a synchronization signal, etc. from an antenna (not shown). Further, the RGB signal processing part 11 subjects the complex video signal from the video signal input part 9 to chroma processing, matrix transformation processing, etc. to convert the complex video signal into an RGB separate signal, and the RGB signal processing part 11 outputs the converted RGB separate signal to the color signal correcting part 12.

The color signal correcting part 12 subjects the RGB separate signal to predetermined correction processing determined based on the color reproduction range, the display mode, etc. in the liquid crystal panel 2, and converts the corrected video signal (R'G'B' separate signal). Specifically, the color signal correcting part 12 receives a measurement result of intensity (amount of light) of ambient light from an optical sensor (not shown) provided in the liquid crystal display device 1, and the color signal correcting part 12 uses the measurement result to calculate a change in the color reproduction range caused by the influence of ambient light in the liquid crystal panel 2, and performs color transformation processing so as to obtain an optimum display color in an ambient light state.

Further, the color signal correcting part 12 reads a color signal of a particular color of a human skin or the like, and corrects a signal value to a color which a user feels more preferable, and increases/decreases the brightness of the entire display surface in accordance with a display mode input from a remote controller accompanying the liquid crystal display device 1. Then, the color signal correcting part 12 subjects the R'G'B' separate signal to γ processing (linearization) with reference to γ data in the LUT 10, and outputs the R'G'B' separate signal to the data delay processing part 13 and the backlight data processing part 15 in the unit of frames (display images).

The data delay processing part 13 is a processing part that delays data of an indication signal output to the liquid crystal panel 2 side so as to match the operation timing of the liquid crystal panel 2 with the operation timing of the backlight device 3, and is configured using, for example, an application specific integrated circuit (ASIC).

Specifically, as shown in FIG. 7, the data delay processing part 13 includes a delay processing part 18, an LED image brightness creating part 19, a target color correcting operation part 20, and a video brightness signal output part 21. The delay processing part 18 receives the R'G'B' separate signal (video signal) from the color signal correcting part 12, and substantially performs the data delay processing by delaying the video signal for a predetermined period of time.

The LED image brightness creating part 19 receives a brightness signal of each LED unit from the backlight data processing part 15. In the brightness signal of each LED unit 8, the brightness value of each of the light-emitting diodes 8r, 8g, 8b contained in the corresponding LED unit 8 is indicated. Further, the LED image brightness creating part 19 acquires data on a point spread function (PSF) from the LUT 10 with respect to the input brightness signal of the LED unit 8. Then, the LED image brightness creasing part 19 calculates an LED brightness value considering the data on the PSF, i.e., gray-scale signal data of the respective light-emitting diodes 8r, 8g, 8b corresponding to all the pixels (for example, 1920 × 1080 pixels), using the brightness values of the indicated respective light-emitting diodes 8r, 8g, 8b and the acquired PSF data, and outputs the gray-scale signal data to the target color correcting operation part 20

The data on the PSF is a numerical value obtained by measuring or calculating the spread of light seen when the light from the respective light-emitting diodes 8r, 8g, 8b pass through the liquid crystal panel 2 including the optical sheet group 5, etc. and is stored previously in the LUT 10. Further, information to be displayed on the liquid crystal panel (display part) 2 can be displayed with more suitable brightness by using the data on the PSF, and display quality can be enhanced. Further, the LUT 10 contains γ data, gray-scale characteristic data (linear characteristics) of the light-emitting diodes 8r, 8g, 8b, and the like.

The target color correcting operation part 20 corrects the input video signal using predetermined CF characteristics of the color filter. Specifically, the target color correcting operation part 20 receives the R'G'B' separate signal (video signal) from the delay processing part 18 and gray-scale signal data from the LED image brightness creating part 19. Then, the target color correcting operation part 20 divides the R'G'B' separate signal (numerator) of each pixel by the gray-scale signal data (denominator) of the light-emitting diodes 8r, 8g, 8b corresponding to the pixel, and thus, an R"G"B" video brightness signal to be output from the LCD signal driver side is obtained.

The video brightness signal output part 21 acquires γ data (white temperature data with respect to a gray-scale) from the LUT 10 with respect to the R"G"B" video brightness signal after the correction from the target color correcting operation part 20, and performs γ gray-scale correction. Then, the video brightness signal output part 21 outputs a video brightness signal of the driver control part 14.

In the present embodiment, it is assumed that the video signal input from the video signal input part 9 considering a TV broadcasting signal is input after being subjected to reverse γ processing. Therefore, if the video signal such as a TV signal input from the video signal input part 9 is input with a linear gray-scale, the γ processing described in the present embodiment can also be omitted.

The driver control part 14 uses a video brightness signal from the video brightness signal output part 21 to generate and output each indication signal to the G (gate) driver 16 and the S (source) driver 17. Further, a plurality of gate lines (not shown) and a plurality of signal lines (not shown) provided on the liquid crystal panel 2 are connected respectively to the G driver 16 and the S driver 17. Then, when the G driver 16 and the S driver 17 output a gate signal and a source signal respectively to the gate lines and the signal lines in accordance with the indication signal from the driver control part 14, the liquid crystal panel 2 is driven in the unit of the pixels, and an image is displayed on the display surface.

The LED image brightness creating part 19, the target color correcting operation part 20, the video brightness signal output part 21, and the driver control part 14 constitute a display control part that corrects the input video signal using a brightness value for each illuminating area from a lighting control part (backlight data processing part) described later, and drives the display part (liquid crystal panel) based on the corrected video signal in the unit of the pixels.

In the above description, the case where the LED image brightness creating part 19, the target color correcting operation part 20, and the video brightness signal output part 21 are set in the data delay processing part 13 has been described. However, the present embodiment is not limited thereto. For example, the delay processing part 18 may be provided separately, and the LED image brightness creating part 19, the target color correcting operation part 20, and the video brightness signal output part 21, and the driver control part 14 may be provided integrally as a display control part.

Further, as shown in FIG. 6, the backlight data processing part 15 is connected to the color signal correcting part 12, and the R'G'B' separate signal (video signal) is input to the backlight data processing part 15. Further, for example, ASIC is used for the backlight processing part 15, and the backlight data processing part 15 constitutes a lighting control part that determines a brightness value of light incident upon the corresponding display area Pa from each of the plurality of illuminating areas Ha for each light source (light-emitting diode), and drives the backlight device 3.

That is, the backlight data processing part 15 is configured so as to output PWM signal values of the respective light-emitting diodes 8r, 8g, 8b to the LED substrates 7 with reference to the LUT 10, regarding the input video signal. In the present embodiment, the lighting control part and the display control part can constitute the liquid crystal display device 1, provided for area active drive with high image quality and less power consumption, compared with a liquid crystal display device using a backlight device having discharge tubes such as cold cathode fluorescent lamps.

Specifically, as shown in FIG. 8, in the backlight data processing part 15, an image brightness extracting part 22, an LED output data operation part 23, and an LED (PWM) output part 24 connected successively to the color signal correcting part 12 are provided. Further, in each LED unit 8 for each illuminating area Ha, the backlight data processing part 15 compares the brightness signal value indicated for the blue light-emitting diode 8b with the brightness signal value indicated for the green light-emitting diode 8g, and lights up the green light-emitting diode 8g using the comparison result, thereby enhancing emission quality (described later in detail).

The image brightness extracting part 22 extracts, for example, a brightness maximum value for each color of RGB of a display image in each display area Pa, based on the R'G'B' image signal. That is, the image brightness extracting part 22 extracts a maximum value of the R'G'B' brightness signal in the display area Pa corresponding to each illuminating area Ha from the R'G'B' image signal, and outputs the maximum value to the LED output data operation part 23 as a reference indication value of a brightness value of the light-emitting diodes 8r, 8g, 8b in the corresponding illuminating area Ha.

Besides the above-mentioned description, the image brightness extracting part 22 can also calculate a brightness average value of each color of RGB in the corresponding illuminating area Ha for each display area Pa, based on the R', G', B' image signal and set the brightness average value as a reference indication value of a brightness value of the light-emitting diodes 8r, 8g, 8b in the illuminating area. Further, the image brightness extracting part 22 can also mix and average the brightness maximum value and the brightness average value to output the result to the offset operation part 23 as the reference indication value. It is preferred that the brightness maximum value is used as a reference indication value since a display image is likely to have peak brightness, as described above.

Further, in the case where a video input from outside contains a noise, a noise signal (for example, a maximum brightness signal value) is picked up when the maximum value of the R'G'B' brightness signal of the display area Pa is extracted, and hence, the maximum value of an exact brightness signal cannot be extracted. Therefore, as a method for eliminating (alleviating) a noise signal, for example, the pixels in the display area Pa are divided on the basis of 20 pixels, and the maximum of an averaged value can be set at the maximum value of the R'G'B' brightness signal in the display area Pa.

The LED output data operation part 23 obtains brightness signals of the light-emitting diodes 8r, 8g, 8b of the corresponding LED unit 8 based on the maximum value (brightness maximum value) of the R'G'B' brightness signal for each illuminating area Ha from the image brightness extracting part 22, and subjects the obtained brightness signals of the light-emitting diodes 8r, 8g, 8b to predetermined correction processing.

Specifically, as shown in FIG. 9, the LED output data operation part 23 includes a brightness calculating part 25 that obtains a brightness calculated value of light emitted from each of the plurality of illuminating areas Ha using the video signal (indication signal) input from outside, and a brightness level determining part 26 that determines the brightness levels of the light-emitting diodes 8r, 8g, 8b in each illuminating area Ha based on the calculation result of the brightness calculating part 25 to determine whether or not a lighting operation is required. Further, the LED output data operation part 23 includes a lighting indication part 27 indicating a lighting operation to the corresponding light-emitting diodes 8r, 8g, 8b based on the determination result of the brightness level determining part 26, a correcting part 28 that subjects the calculation result of the brightness calculating part 25 to predetermined correction processing, and a storage part 29 that stores predetermined data such as data (brightness calculated value) of the brightness signals of all the light-emitting diodes 8r, 8g, 8b in the previous emission operation (display operation).

The brightness calculating part 25 obtains the calculated brightness values of the light-emitting diodes 8r, 8g, 8b in the corresponding illuminating area Ha, that is, the LED unit 8 based on the brightness maximum value for each RGB from the image brightness extracting part 22. Further, the calculated brightness values are those which are indicated as the input video signals with respect to the respective light-emitting diodes 8r, 8g, 8b, and are used for the processing operation in the subsequent brightness level determining part 26.

The brightness level determining part 26 determines whether or not a lighting operation of the corresponding light-emitting diodes 8r, 8g, 8b is required, based on the calculated brightness values of the light-emitting diodes 8r, 8g, 8b of each LED unit 8 from the brightness calculating part 25. Further, the brightness level determining part 26 compares the magnitude (level) of the calculated brightness value of the light-emitting diode 8g with the calculated brightness value of the light-emitting diode 8b for each LED unit 8 (illuminating area Ha), and lights up the light-emitting diode 8g based on the comparison result (described later in detail).

Further, the brightness level determining part 26 can obtain an R"G"B" video brightness signal in the target color correcting operation part 20 exactly, using the value of a minimum offset brightness (for example, 1% of the maximum brightness of light that can be emitted by an LED) previously stored in the LUT 10. More specifically, the brightness level determining part 26 obtains a value of a minimum offset brightness of a corresponding color from the LUT 10, and when the value of gray-scale signal data of any of the light-emitting diodes 8r, 8g, 8b is less than the value of the minimum offset brightness, the brightness level determining part 26 replaces the brightness value of the light-emitting diode that is less than the value of the minimum offset brightness by the obtained value.

Due to the above-mentioned replacement processing, when the target color correcting operation part 20 performs the above-mentioned division using the brightness values (gray-scale signal data) of the light-emitting diodes 8r, 8g, 8b as denominators, insufficient precision and errors caused by the use of "0" or the value in the vicinity thereof can be avoided, and the minute variations in characteristics such as LED emission and current supply ability of an LED substrate can be avoided. Therefore, the target color correcting operation part 20 can calculate the R"G"B" video brightness signal exactly.

It is preferred that the value of the minimum offset brightness is not set to be too large, and for example, is set to be about 0.1% to 10% of the maximum brightness of light that can be emitted.

The lighting indication part 27 indicates a lighting operation to the light-emitting diodes 8r, 8g, 8b of each corresponding LED unit 8, based on the determination result from the brightness level determining part 26.

The correcting part 28 is configured so as to correct the calculated brightness value obtained by the brightness calculating part 25 so that the consistency with the previous calculated brightness value obtained by the brightness calculating part 25 is ensured, with reference to the storage part 29 for each illuminating area Ha (LED unit 8). Thus, in the backlight device 3 of the present embodiment, a change in brightness can be prevented from increasing remarkably from the previous lighting operation and emission quality can be prevented from decreasing, in each illuminating area Ha.

Further, the correcting part 28 is configured so as to correct the calculated brightness value obtained by the brightness calculating part 25 so that the brightness valance with respect to the adjacent illuminating area Ha takes a value within a predetermined valance range for each illuminating area Ha. Thus, in the backlight device 3 of the present embodiment, a large change in brightness can be prevented from occurring with respect to the surrounding illuminating area Ha and emission quality can be prevented from decreasing, in each illuminating area Ha.

Further, the LED output data operation part 23 outputs a brightness signal of each LED unit 8, after being subjected to correction operation by the correcting part 28, to the LED (PWM) output part 24 and the data delay processing part 13.

The LED (PWM) output part 24 generates a PWM signal for driving the respective light-emitting diodes 8r, 8g, 8b of the corresponding LED unit 8, using the brightness signal of each LED unit 8 from the LED output data operation part 23 and the PWM control data from the LUT 10, and outputs the PWM signal to the corresponding LED substrate 7. Thus, in the LED substrate 7, the respective light-emitting diodes 8r, 8g, 8b emit light in accordance with the PWM signal.

In the above description, the case of driving the respective light-emitting diodes 8r, 8g, 8b by PWM dimming using a PWM signal has been described. However, the present embodiment is not limited thereto. For example, the respective light-emitting diodes 8r, 8g, 8b may be driven using current dimming (herein, referring to a gray-scale control system by modifying an LED current value with an input gray-scale signal).

The case of using the PWM dimming is more preferred than the case of using current dimming for the following reason: the color temperature of an LED has characteristics of being dependent upon a working current, and in order to maintain faithful color reproduction while obtaining desired brightness, it is required to drive an LED with a PWM signal to suppress a change in color.

Further, besides the above description, the configuration of correcting a brightness signal from the LED output data operation part 23 using the detection results of sensor means such as a temperature sensor and a timer provided in the liquid crystal display device 1 may be provided in the LED (PWM) output part 24. That is, the following function may be added: the LED (PWM) output part 24 corrects a change in emission efficiency of the respective light-emitting diodes 8r, 8g, 8b caused by a change in ambient temperature, using the detection result of the temperature sensor, and corrects a change in emission efficiency of the respective light-emitting diodes 8r, 8g, 8b and a change in color caused by a change with the passage of time, using the measurement result of a lighting time from a timer.

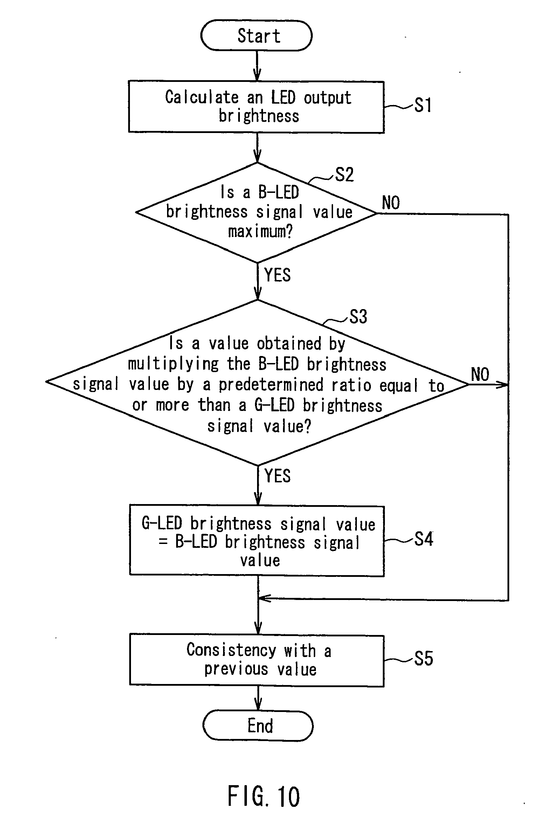

Herein, an operation of the liquid crystal display device 1 of the present embodiment will be described with reference to FIG. 10. In the following description, the lighting operation of the light-emitting diodes 8r, 8g, 8b in each LED unit 8 in the LED output data operation part 23 will be mainly described.

FIG. 10 is a flowchart showing a processing operation in the LED output data operation part.

As shown in Step S1 of FIG. 10, in the LED output data operation part 23, the brightness calculating part 25 calculates calculated brightness values of the light-emitting diodes 8r, 8g, 8b of the corresponding LED unit 8 based on the above-mentioned brightness maximum value for each RGB for each illuminating area Ha, and the LED output data operation part 23 outputs the calculated brightness values to the brightness level determining part 26.

Next, the brightness level determining part 26 determines whether or not the calculated brightness value (B-LED brightness signal value) of the light-emitting diode 8b is maximum among the light-emitting diodes 8r, 8g, 8b in each LED unit 8 (Step S2), and when it is determined that the calculated brightness value is not maximum, the process proceeds to Step S5 described later.

On the other hand, when the brightness level determining part 26 determines that the calculated brightness value of the light-emitting diode 8b is maximum in Step S2, the brightness level determining part 26 determines whether or not a value obtained by multiplying the calculated brightness value of the light-emitting diode 8b by a predetermined ratio is equal to or more than the calculated brightness value (G-LED brightness signal value) of the light-emitting diode 8g (Step S3). That is, the brightness level determining part 26 determines whether or not the calculated brightness value of the light-emitting diode 8g is equal to or more than a value obtained by multiplying the calculated brightness value of the light-emitting diode 8b by the predetermined ratio previously stored in the LUT 10. When it is determined that the calculated brightness value of the light-emitting diode 8g is less than a value obtained by multiplying the calculated brightness value of the light-emitting diode 8b by the predetermined ratio (that is, the influence of the LED brightness of G on the CF of B is small), the process proceeds to Step S5 described later.

Further, the predetermined ratio used in Step S3 is previously determined based on predetermined CF characteristics of the color filter 2d and predetermined emission characteristics of the light-emitting diodes 8b, 8g. Specifically, as the predetermined ratio, a value of an appropriate ratio is determined by performing a test, simulation, or the like using an actual product of the liquid crystal display device 1 and previously stored in the LUT 10. Thus, the brightness level determining part 26 can perform each lighting control of the light-emitting diodes 8b, 8g more appropriately in accordance with the predetermined CF characteristics and predetermined emission characteristics.

On the other hand, when it is determined that the value obtained by multiplying the calculated brightness value of the light-emitting diode 8b by the predetermined ratio is equal to or more than the calculated brightness value of the light-emitting diode 8g (the influence of the LED brightness of G on the CF of B is large), the brightness level determining part 26 changes the calculated brightness value of the light-emitting diode 8g so that the calculated brightness value of the light-emitting diode 8g becomes the same as the calculated brightness value of the light-emitting diode 8b (Step S4).

As described above, the brightness level determining part (lighting control part) 26 performs the above-mentioned determination processing only with respect to blue light and green light that have wavelengths relatively close to each other and are relatively likely to cause a decrease in emission quality, which can reduce the processing burden on the lighting control part. This is preferred in terms of the following: the lighting control part can perform lighting control of the light-emitting diode at a high speed.

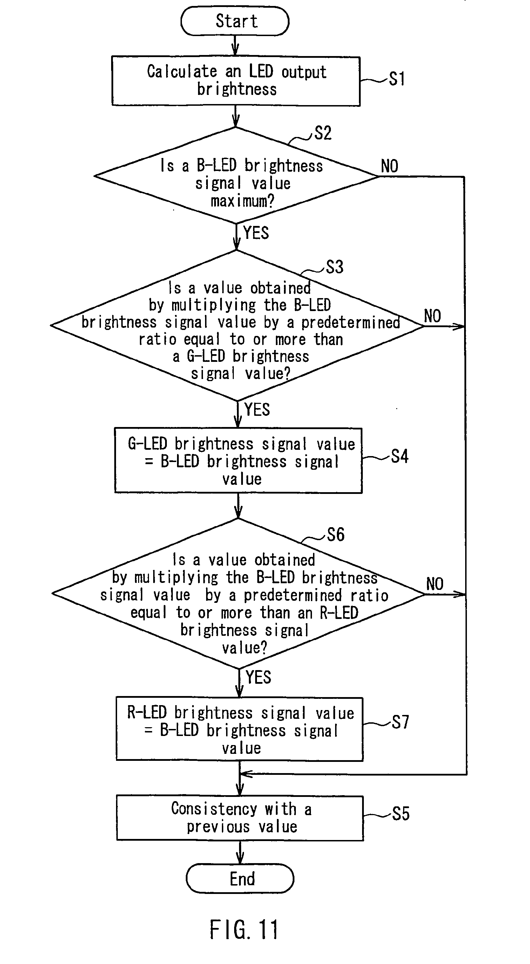

The influence of interference of a wavelength on the light-emitting diode 8b is small in the light-emitting diode 8r, and hence, the brightness level determining part 26 does not perform comparison processing of the respective calculated brightness values of the light-emitting diodes 8b, 8r. However, the present embodiment is not limited thereto, and the processes similar to those in Steps S3 and S4 may be performed regarding the calculated brightness value of the light-emitting diode 8r as shown in Steps S6 and S7 of FIG. 11 in accordance with the relationship of the characteristics between the color filter and the light-emitting diode so that the lighting control of the light-emitting diode 8r is performed more accurately.

Specifically, the calculated brightness value of the light-emitting diode 8r may be changed so as to be the same as the calculated brightness value of the light-emitting diode 8b when it is determined that the value obtained by multiplying the calculated brightness value of the light-emitting diode 8b by the predetermined value is equal to or more than the calculated brightness value of the light-emitting diode 8r. It is preferred that the predetermined ratio used in Step S6 is determined using predetermined emission characteristics of the light-emitting diode 8r, since the lighting control of the light-emitting diode 8r can be performed more appropriately.

After that, in the LED output data operation part 23, the correcting part 28 corrects each calculated brightness value of the light-emitting diodes 8r, 8g, 8b so that the consistency with the previous calculated brightness value is ensured for each illuminating area Ha and the brightness balance between the adjacent illuminating areas Ha falls within a predetermined balance range (Step S5), and then, the calculated brightness values are output to the LED (PWM) output part 24 and the data delay processing part 13.

In the present embodiment configured as described above, the LED unit (light source) 8 including the light-emitting diodes (light sources) 8r, 8g, 8b of RGB is provided for each illuminating area Ha. Further, the backlight data processing part (lighting control part) 15 is set, which lights up the green light-emitting diode 8g using the calculated brightness value of the blue light-emitting diode 8b, when it is determined that the calculated brightness value (brightness signal value) of the blue light-emitting diode 8b (light source of a predetermined color) is larger than each calculated brightness value (brightness signal value) of the other light-emitting diodes 8r, 8g (other light sources) and the value obtained by multiplying the calculated brightness value of the blue light-emitting diode 8b by the predetermined ratio is equal to or more than the calculated brightness value of the green light-emitting diode 8g, in each illuminating area Ha. Thus, unlike the conventional example, color displacement caused by light from the adjacent illuminating area Ha or the like is prevented from being recognized visually even when area active drive is performed. As a result, in the present embodiment, unlike the conventional example, the liquid crystal display device (display device) 1 capable of enhancing the color reproduction ability and the display quality even when area active drive is performed can be configured.

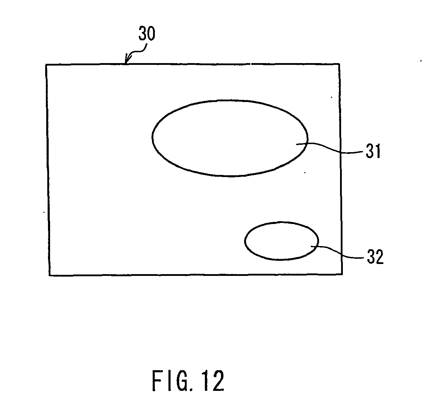

Specifically, as illustrated in FIG. 12, regarding a sky 30, a natural sky color having the same chromaticity as that of the display surface can be displayed (reproduced) on the display surface. That is, in each boundary portion between the sky 30 and white clouds 31, 32, the above-mentioned processing operation shown in Step S4 of FIG. 10 is performed, a change in blue color is prevented from being recognized visually more than necessary in each boundary portion and the occurrence of color displacement caused by the relationship in characteristics between the color filter of B and the LED of G is suppressed, and thus, the display of an unnatural video is minimized.

### [Embodiment 2]

FIG. 13 is a diagram illustrating a configuration of main portions of a liquid crystal display device according to Embodiment 2 of the present invention. FIG. 14 is a block diagram showing a specific configuration of an LUT control part shown in FIG. 13. In figure, the main difference between the present embodiment and Embodiment 1 lies in that the LUT control part controlling an LUT is provided, and a predetermined ratio output from the LUT to the backlight data processing part is changed based on an indication signal from outside. The elements common to those of Embodiment 1 are denoted with the same reference numerals as those therein, and the repeated descriptions thereof will be omitted.

More specifically, as shown in FIG. 13, in the liquid crystal display device 1 of the present embodiment, a LUT control part 30 connected to the LUT 10 and controlling the LUT 10 is provided. As illustrated in FIG. 14, the LUT control part 30 includes a video display mode storage part 31 and an LUT value change processing part 32, and is configured so as to change the predetermined ratio output from the LUT 10 to the backlight processing part (lighting control part) 15 in accordance with a display mode indication signal (indication signal) from outside.

Specifically, in the liquid crystal display device 1 of the present embodiment, a plurality of (video) display modes in the liquid crystal panel (display part) 2 are set, and one display mode is selected appropriately in accordance with a user's desire. More specifically, the liquid crystal display device 1 of the present embodiment is configured so that display modes having different predetermined ratios, such as a dynamic mode, a movie mode, and a personal computer (PC) mode, can be selected in addition to a standard mode (standard display mode) in Embodiment 1. In these display modes, a specific predetermined ratio value is set at 0.6 (60%), 0.5 (50%), 0.7 (70%), and 1.0 (100%) for the standard mode, the dynamic mode, the movie mode, and the PC mode, respectively The predetermined ratio value in each display mode is previously set for each display mode by performing a test, simulation, or the like using an actual product of the liquid crystal display device 1, and is previously stored in the LUT value change processing part 32.

In the dynamic mode, a display with importance being placed on a contrast compared with the standard mode is performed in the liquid crystal panel 2. Further, in the movie mode, a display with importance being placed on gray-scale reproducibility compared with the standard mode is performed in the liquid crystal panel 2, and in the PC mode, monochromic (display) drive is performed in the liquid crystal panel 2.

Further, the LUT control part 30 is configured so that a display mode desired by a user is input as a display mode indication signal, for example, via a remote controller provided in the liquid crystal display device 1. Then, in the LUT control part 30, the video display mode storage part 31 stores a display mode specified by the input display mode indication signal, and notifies the LUT value change processing part 32 of a signal indicating the stored display mode.

The LUT value change processing part 32 constructs a storage part storing a plurality of kinds of predetermined ratios together with the LUT 10, and has a function of a selecting and indicating part that selects one kind of predetermined ratio from a plurality of kinds of predetermined ratios stored in the storage part based on the display mode indication signal (indication signal) from outside and outputs the selected predetermined ratio to the backlight data processing part (lighting control part) 15. That is, as described above, the LUT value change processing part 32 previously stores four kinds of predetermined ratios corresponding to four display modes. Then, when the display mode desired by the user is determined based on a signal input from the video display mode storage part 31, the LUT value change processing part 32 selects a predetermined ratio in the determined display mode and outputs the selected predetermined ratio to the LUT 10 to cause the LUT 10 to store the predetermine ratio. Then, the LUT 10 outputs a predetermined ratio appropriately to the backlight data processing part (lighting control part) 15 so that the stored predetermined ratio is used for operation processing in the backlight data processing part 15.

With the above-mentioned configuration, in the present embodiment, the function and effects similar to those of Embodiment 1 can be exhibited. Further, in the present embodiment, the LUT control part 30 controlling the LUT 10 is provided to change a predetermined ratio output from the LUT 10 to the backlight data processing part (lighting control part) 15 based on the display mode indication signal (indication signal) from outside. Thus, in the present embodiment, a predetermined ratio in accordance with the indication signal is selected to be output to the backlight data processing part 15, and the backlight data processing part 15 can appropriately control each lighting drive of the plurality of light-emitting diodes (light sources) 8r, 8g, 8b in each of the plurality of illuminating areas Ha, using the selected predetermined ratio. Further, since the display mode indication signal specifies a display mode in the liquid crystal panel (display part) 2, an optimum predetermined ratio is selected in accordance with the display mode desired by the user and a display in the liquid crystal panel 2 can be performed appropriately in accordance with the display mode desired by the user in the present embodiment.

The above-mentioned embodiments are shown merely for illustration and are not limiting. The technical range of the present invention is defined by the claims, and all the alterations within the range equivalent to the configuration described therein are also included in the technical range of the present invention.

For example, in the above-mentioned description, the case where the present invention is applied to the transmission-type liquid crystal display device has been described. However, the backlight device of the present invention is not limited thereto, and the present invention can be applied to various display devices having a non-light-emitting display part that displays information such as images and characters using light from a light source. Specifically, the display device of the present invention can be used preferably as a semi-transmission-type liquid crystal display device or a projection-type display device such as a rear projection using the liquid crystal panel in a light valve.

Further, in the above-mentioned description, as shown respectively in Steps S4 and S7 of FIG. 11, the case where the G-LED brightness signal value and the R-LED brightness signal value are changed respectively to B-LED brightness signal values has been described. The present invention may have the following configuration: when it is determined that the brightness signal value indicated for a light source of a predetermined color is larger than the brightness signal value indicated for another light source and that a value obtained by multiplying the brightness signal value indicated for the light source of the predetermined color by a predetermined ratio is equal to or more than the brightness signal value indicated for another light source, another light source is lit up using the brightness signal value indicated for the light source of the predetermined color. Specifically, for example, in Step S4, the G-LED may be lit up, using the value obtained by multiplying the B-LED brightness signal value by the predetermined value as the G-LED brightness signal value. Similarly, in Step S7, the R-LED may be lit up, using the value obtained by multiplying the B-LED brightness signal value by the predetermined ratio as the R-LED brightness signal value.

Further, in the above description, the case where a direct type backlight device is configured has been described. However, the backlight device (backlight part) of the present invention is not limited thereto, and other types of the backlight devices, such as an edge-light type or tandem type having a light-guiding plate that guides light from a light source for each illuminating area, can also be configured.

Further, in the above-mentioned description, the case using light-emitting diodes of RGB as light sources has been described. However, according to the present invention, a plurality of light sources emitting light of colors corresponding to the colors of color filters of a plurality of colors may be used, and other light-emitting elements such as an organic electroluminescent (EL) element, other point light sources such as a plasma display panel (PDP), discharge tubes, etc. can also be used. Further, a hybrid light source in which a point light source and a discharge tube are present can also be used.

As described above, it is preferred to use a light-emitting diode, since a miniaturized backlight device with high performance can be easily configured, which is excellent in color reproducibility and cost, and can easily construct a light source with a long longevity and a compact size. Further, it is preferred to use red, green, and blue light-emitting diodes as described above, since a backlight device excellent in color reproducibility can be configured easily.

Further, in the above-mentioned description, the case where the lighting control part (backlight data processing part) uses an input video signal to control each lighting drive of the light sources of three colors that can be mixed with white light, provided in each illuminating area, has been described. However, there is no particular limit to the lighting control part of the present invention, as long as the lighting control part controls each lighting drive of the above-mentioned plurality of light sources in each illuminating area, using an indication signal from outside.

Further, in the above-mentioned description, the case of a blue light-emitting diode and another light-emitting diode has been described. However, a light-emitting diode of a predetermined color other than blue and another light-emitting diode can be used depending upon the relationship between the spectral distribution of a light-emitting diode and a spectral transmission distribution of a color filter.

Further, in the above-mentioned description, the configuration, in which predetermined data such as a value of a predetermined ratio, data on the PSF, γ data, and gray-scale characteristics data on a light-emitting diode are stored previously in the LUT, has been described. However, the present invention is not limited thereto, and for example, respective data may be stored in separate LUTs.

Further, in the description of Embodiment 2, the case where a storage part storing a plurality of kinds of predetermined ratios by the LUT and the LUT value change processing part has been described. However, the storage part of the present invention is not limited thereto, and other storage devices such as a semiconductor memory and a hard disk drive can also be used.

Further, in the description of Embodiment 2, the configuration has been described in which the LUT value change processing part is provided with functions of the above-mentioned storage part and the selecting and indicating part that selects one kind of predetermined ratio from a plurality of kinds of predetermined ratios stored in the storage part based on an indication signal from outside and outputs the selected predetermined ratio to the lighting control part. However, the present invention is not limited thereto, and the storage part and the selecting and indicating part may be configured separately.

### Industrial Applicability

The present invention is useful to a display device capable of enhancing a display quality even when area active drive is performed.

## Claims

1. A display device including a backlight part having a light-emitting part that emits illumination light and a display part configured so as to be capable of displaying information in color, using the illumination light from the backlight part,
the display part having a plurality of pixels, and each of the pixels being provided with color filters formed of a plurality of colors,
the display device comprising:
a plurality of illuminating areas provided in the light-emitting part;
a plurality of light sources that are provided for each of the illuminating areas and emit light of colors corresponding to the colors of the color filters and
a lighting control part that controls each lighting drive of the plurality of light sources in each of the plurality of illuminating areas, using an indication signal input from outside,
wherein the color filter formed of a predetermined color among the color filters formed of a plurality of colors provided on each of the pixels has characteristics of transmitting light from the light source of the predetermined color corresponding to the color filter and light form the other light sources, and
when the lighting control part determines that a brightness signal value indicated for the light source of the predetermined color is larger than brightness signal values indicated for the other light sources in each of the plurality of illuminating areas and that a value obtained by multiplying the brightness signal value indicated for the light source of the predetermined color by a predetermined ratio is equal to or more than the brightness signal values indicated for the other light sources, the lighting control part lights up the other light sources, using the brightness signal value indicated for the light source of the predetermined color.

2. The display device according to claim 1, wherein a plurality of display areas, upon which light from the plurality of illuminating areas is incident respectively, are set in the display part,
the display device including a display control part that drives the display part in a unit of the pixels, using an input video signal,
wherein the lighting control part determines a brightness value of light emitted from the corresponding light source for each of the illuminating areas, using the input video signal, and
the display control part corrects the input video signal, using the brightness value for each of the illuminating areas from the lighting control part, and drives the display part based on the corrected video signal in the unit of the pixels.

3. The display device according to claim 2, wherein the display control part corrects the brightness value for each of the illuminating areas from the lighting control part, using data on a previously set point spread function (PSF).

4. The display device according to any one of claims 1 to 3, wherein light-emitting diodes are used as the light sources.

5. The display device according to any one of claims 1 to 4,
wherein red, green, and blue light-emitting diodes that emit red light, green light, and blue light, respectively, are used as the light sources, and
when the lighting control part determines that a brightness signal value indicated for the blue light-emitting diode is larger than a brightness signal value indicated for the green light-emitting diode in each of the plurality of illuminating areas and that a value obtained by multiplying the brightness signal value indicated for the blue light source by the predetermined ratio is equal to or more than the brightness signal value indicated for the green light-emitting diode, the lighting control part lights up the green light-emitting diode, using the brightness signal value indicated for the blue light-emitting diode.

6. The display device according to any one of claims 1 to 5, wherein the lighting control part uses the predetermined ratio previously determined based on predetermined CF characteristics of the color filters and predetermined emission characteristics of the light sources.

7. The display device according to any one of claims 1 to 6, comprising a storage part that stores a plurality of kinds of the predetermined ratios, and a selecting and indicating part that selects one kind of predetermined ratio from the plurality of kinds of predetermined ratios stored in the storage part based on an indication signal from outside and outputs the selected predetermined ratio to the lighting control part.

8. The display device according to claim 7, wherein the indication signal is a display mode indication signal indicating a display mode in the display part.
